# FASCICULE DE BREVET EUROPEEN

(11) **EP 3 849 038 B1**
(45) Date de publication et mention de la délivrance du brevet: **26.01.2022**
(21) Numéro de dépôt: 21150526.8
(22) Date de dépôt: 07.01.2021
(51) Int. Cl.: B60L 50/75, B60L 58/40, H02J 1/10, H02J 7/34, H02M 3/335

(54) **SYSTÈME D'ALIMENTATION ÉLECTRIQUE POUR UN VÉHICULE ÉLECTRIQUE**
STROMVERSORGUNGSSYSTEM FÜR EIN ELEKTROFAHRZEUG
POWER SUPPLY SYSTEM FOR AN ELECTRIC VEHICLE

(30) Priorité: 07.01.2020 FR 2000088
(43) Date de publication de la demande: 14.07.2021
(73) Titulaire: ALSTOM Transport Technologies, 93400 Saint-Ouen-sur Seine (FR)
(72) Inventeur: BARLINI, Davide, 65320 BORDÈRES-SUR-L'ÉCHEZ (FR); POMES, Jean-Luc, 65350 CASTERA-LOU (FR)
(74) Mandataire: Lavoix

(56) Documents cités:
- EP-A2- 3 073 626
- CN-B- 102 624 234
- DE-A1-102014 011 768
- DE-T5-112015 004 164
- US-A1- 2016 264 006
- US-A1- 2018 131 184
- US-A1- 2019 173 387
- H. TAO ET AL: "Family of multiport bidirectional DC-DC converters", IEE PROCEEDINGS: ELECTRIC POWER APPLICATIONS., vol. 153, no. 3, 1 janvier 2006 (2006-01-01), page 451, XP055715206, GB ISSN: 1350-2352, DOI: 10.1049/ip-epa:20050362
- JYOTHEESWARA REDDY K ET AL: "Energy sources and multi-input DC-DC converters used in hybrid electric vehicle applications - A review", INTERNATIONAL JOURNAL OF HYDROGEN ENERGY, ELSEVIER SCIENCE PUBLISHERS B.V., BARKING, GB, vol. 43, no. 36, 13 août 2018 (2018-08-13) , pages 17387-17408, XP085451713, ISSN: 0360-3199, DOI: 10.1016/J.IJHYDENE.2018.07.076

## Description

La présente invention concerne un système d'alimentation électrique pour un véhicule électrique, ainsi qu'un véhicule électrique comportant un tel système d'alimentation électrique.

Les véhicules électriques, et plus particulièrement les véhicules ferroviaires à traction électrique, comportent dans certains cas particuliers, notamment lorsqu'on souhaite pouvoir les opérer sans source extérieur d'électricité (caténaire, rail d'alimentation) et sans utiliser un moteur thermique, un système de stockage d'électricité, tel qu'une ou plusieurs batteries d'accumulateurs.

Pour augmenter l'autonomie en énergie de tels véhicules, une pile à combustible peut être associée au système de stockage d'électricité. De tels systèmes d'alimentation électrique sont connus des documents suivants: H. TAO ET AL: "Family of multiport bidirectional DC-DC converters", IEE PROCEEDINGS: ELECTRIC POWER APPLICATIONS, vol. 153, no. 3, 1 janvier 2006 (2006-01-01); JYOTHEESWARA REDDY K ET AL: "Energy sources and multi-input DC-DC converters used in hybrid electric vehicle applications - A review", INTERNATIONAL JOURNAL OF HYDROGEN ENERGY, ELSEVIER SCIENCE PUBLISHERS B.V., vol. 43, no. 36, 13 août 2018 (2018-08-13).

Cela nécessite toutefois de modifier la chaîne de traction électrique du véhicule, notamment au niveau des blocs de conversion de puissance.

A cet effet, il est possible d'utiliser des convertisseurs de puissance indépendants pour la pile à combustible et pour la batterie. Toutefois cela n'est pas toujours souhaitable, car cela accroît le coût et la complexité de la chaîne de traction. Cela tend aussi à dégrader la performance électrique de l'ensemble.

Il existe donc un besoin pour un convertisseur unique de puissance facilitant l'intégration à la fois d'une pile à combustible et d'une batterie électrique dans un véhicule électrique. Le document DE 11 2015 004164 T5 décrit des convertisseurs DC/DC réversibles multi-ports capables d'être connectés à multiples sources d'alimentation électrique.

A cet effet, l'invention concerne un système d'alimentation électrique pour un véhicule électrique, tel qu'un véhicule ferroviaire, le système d'alimentation électrique étant tel que défini par la revendication 1 et comportant : une pile à combustible, une batterie électrique, un premier élément de conversion de puissance, un deuxième élément de conversion de puissance et un transformateur,
dans lequel une entrée du premier élément de conversion est configurée pour recevoir un courant de charge ou délivrer un courant de traction,
dans lequel le transformateur comporte un enroulement primaire, un premier enroulement secondaire et un deuxième enroulement secondaire, l'enroulement primaire étant connecté à une sortie du premier élément de conversion et les enroulements secondaires étant connectés à une entrée du deuxième élément de conversion,
dans lequel la batterie est connectée aux bornes d'une sortie du deuxième élément de conversion,
et dans lequel la pile à combustible est connectée en série avec une inductance à un point médian du transformateur entre le premier enroulement secondaire et le deuxième enroulement secondaire.

Grâce à l'invention, il est possible d'utiliser un seul système d'alimentation électrique incluant un convertisseur de puissance unique (comprenant les premier et deuxième élément de conversion et le transformateur), capable de fonctionner aussi bien pour charger la batterie que pour alimenter la chaîne de traction à partir du courant fourni par la pile à combustible et la batterie.

Ainsi, il n'est pas nécessaire d'utiliser des convertisseurs de puissance séparés pour la batterie et la pile à combustible, ce qui aurait l'inconvénient d'être trop coûteux et compliquer à intégrer, notamment en termes d'encombrement. Les dimensions sont également réduites, notamment lorsque le système fonctionne avec des fréquences de découpage élevées.

Les modes particuliers de réalisation de l'invention sont définis par les revendications dépendantes 2 à 7.

L'invention sera mieux comprise et d'autres avantages de celle-ci apparaîtront plus clairement à la lumière de la description qui va suivre d'un mode de réalisation d'un convertisseur de puissance donnée uniquement à titre d'exemple et faite en référence aux dessins annexés, dans lesquels :
[Fig 1] la figure 1 est un schéma d'un système d'alimentation électrique pour un véhicule ferroviaire comportant un convertisseur de puissance unique conforme à un mode de réalisation de l'invention ;
[Fig 2] la figure 2 est un diagramme représentant un exemple de signal de commande utilisé pour piloter un deuxième élément de conversion du convertisseur de puissance de la figure 1 pour réaliser un deuxième mode de fonctionnement;
[Fig 3] la figure 3 est un diagramme représentant un exemple de loi de commande du deuxième élément de conversion du convertisseur de puissance de la figure 1 pour réaliser un troisième mode de fonctionnement.

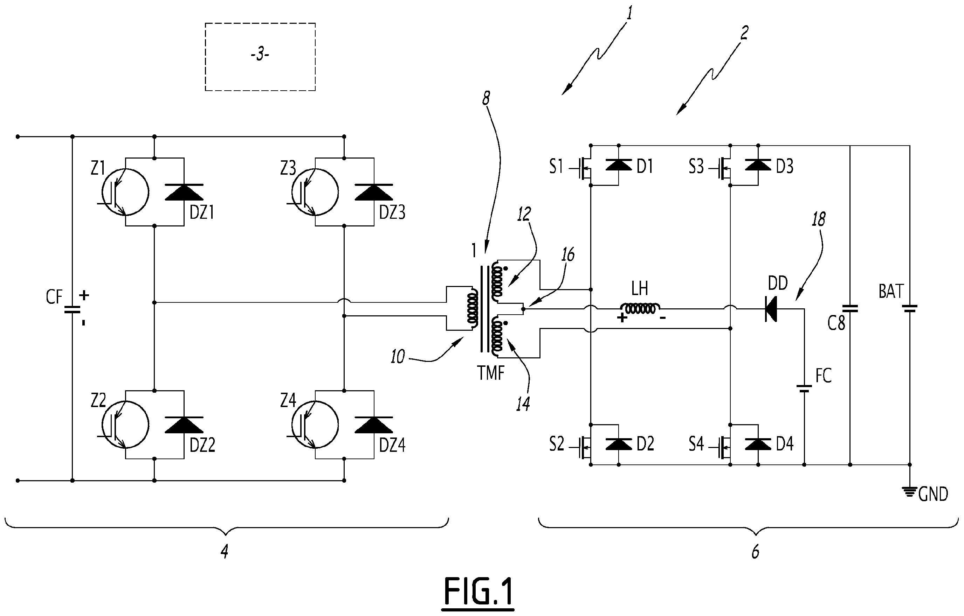

Sur la figure 1 est représenté un système d'alimentation électrique 2 pour un véhicule électrique 1, tel qu'un véhicule ferroviaire à traction électrique.

Selon des exemples non limitatifs, le véhicule ferroviaire peut être un train de passagers, ou un train à grande vitesse, ou une locomotive, ou un véhicule de service tel qu'une draisine ou un locotracteur, ou un véhicule de transport urbain tel qu'un métro ou un tramway.

En variante, le véhicule 1 peut être un véhicule électrique routier, tel qu'un autobus électrique.

Selon des exemples, le véhicule 1 comporte une chaîne de traction électrique comprenant un ou plusieurs moteurs électriques configurés pour entraîner le véhicule en déplacement le long d'une voie. En variante, la chaîne de traction peut comporter une ou plusieurs charges électriques de nature différente.

Selon des modes de réalisation, le véhicule 1 comporte également un système de collecte de courant, non illustré, configuré pour collecter un courant électrique fourni par une source d'alimentation extérieure et pour alimenter la chaîne de traction avec le courant électrique collecté.

Par exemple, le système de collecte peut comporter un pantographe ou un patin configuré pour coopérer avec, respectivement, une caténaire ou un rail d'alimentation.

En variante, le système de collecte peut comporter une prise apte à coopérer avec une borne de chargement électrique.

Selon d'autres variantes, le système de collecte peut comprendre un système de couplage par induction ou une antenne radio.

Le système d'alimentation électrique 2 comporte une pile à combustible FC, une batterie électrique BAT, un premier élément de conversion de puissance 4, un deuxième élément de conversion de puissance 6 et un transformateur 8.

Le premier élément de conversion de puissance 4, le deuxième élément de conversion de puissance 6 et le transformateur 8 sont associés pour former un unique convertisseur de puissance continu-continu.

Selon des modes de réalisation, la batterie BAT est apte à stocker de l'énergie pour alimenter électriquement au moins en partie le véhicule 1, et notamment la chaîne de traction du véhicule 1, lorsque le véhicule 1 n'est pas alimenté par une source d'alimentation extérieure. C'est par exemple le cas d'un véhicule ferroviaire qui circule sur une portion de voie dépourvue de caténaire ou de rail d'alimentation.

Par exemple, la batterie BAT peut comporter une batterie d'accumulateurs électrochimiques. En variante, la batterie BAT peut comporter un ensemble de condensateurs ou de super-condensateurs, ou toute technologie appropriée de stockage d'électricité.

Selon un exemple non limitatif, la batterie BAT présente une tension supérieure ou égale à 750V DC entre ses bornes lorsqu'elle est chargée.

La pile à combustible FC est apte à générer de l'électricité pour recharger la batterie BAT et/ou alimenter électriquement au moins en partie le véhicule 1, et notamment la chaîne de traction du véhicule 1, lorsque le véhicule 1 n'est pas alimenté par une source d'alimentation extérieure. La pile à combustible FC fournit une source d'énergie supplémentaire embarquée à bord du véhicule 1 lorsque ce dernier n'est pas alimenté par une source d'alimentation extérieure. Par exemple, la pile à combustible FC peut être alimentée par un réservoir d'hydrogène, non illustré, embarqué à bord du véhicule 1.

Selon un exemple non limitatif, la tension électrique aux bornes de la pile à combustible FC lorsqu'elle est en fonctionnement est supérieure ou égale à 400V DC.

Dans de nombreux modes de réalisation, la tension électrique aux bornes de la batterie BAT est supérieure à la tension électrique aux bornes de la pile à combustible FC.

Le premier élément de conversion 4 comporte des bornes d'entrée qui forment une entrée du système 2 et qui permettent de raccorder le système 2 à une chaîne de traction électrique du véhicule 1. Ainsi, le système 2 peut être raccordé alternativement à une source d'alimentation électrique ou à une charge électrique, en fonction des circonstances d'utilisation du véhicule 1.

Par exemple, la tension aux bornes d'entrée du premier élément de conversion 4 est supérieure ou égale à 1500V ou à 3000V. Ainsi, le premier élément de conversion 4 forme un étage à haute tension du système d'alimentation 2.

Le transformateur 8 comporte un enroulement primaire 10, un premier enroulement secondaire 12 et un deuxième enroulement secondaire 14 connectés entre eux par un point médian 16.

Par exemple, le premier enroulement 12 et le deuxième enroulement 14 ont une même longueur et un même nombre de spires.

Le transformateur 8 peut comporter un noyau magnétique, noté TMF, autour duquel sont entourés les enroulements 10, 12 et 14.

Selon des modes de réalisation, l'enroulement primaire 10 est connecté à une sortie du premier élément de conversion et les enroulements secondaires 12, 14 sont connectés à une entrée du deuxième élément de conversion 6.

La batterie BAT est raccordée entre des bornes de sortie du deuxième élément de conversion 6.

Selon des exemples de réalisation, une des bornes de sortie du deuxième élément de conversion 6 est connectée à une masse électrique GND commune.

Selon l'invention, les premier et deuxième éléments de conversion 4 et 6 sont des convertisseurs « pont » comportant chacun une pluralité d'interrupteurs de puissance pilotés par un dispositif de commande électronique 3.

Par exemple, les interrupteurs de puissance sont des transistors, tels que des transistors bipolaires à grille isolée (IGBT), ou des transistors MOSFET, ou toute autre technologie appropriée de transistor de puissance.

Selon des exemples de réalisation, le premier élément de conversion 4 assure une conversion de tension continu-alternatif et le deuxième élément de conversion 6 assure une conversion de tension alternatif-continu.

Dans l'exemple illustré, le premier élément de conversion 4 comporte quatre interrupteurs de puissance Z1, Z2, Z3 et Z4 formés par des transistors notamment.

Deux transistors Z1 et Z2 sont connectés en série dans un premier bras du premier élément de conversion 4 entre les bornes d'entrée. Deux autres transistors Z3 et Z4 sont connectés en série dans un deuxième bras du premier élément de conversion 4 en parallèle avec le premier bras.

Une première borne de l'enroulement primaire 10 est connectée à un point du premier bras entre les transistors Z1 et Z2.

Une deuxième borne de l'enroulement primaire 10 est connectée à un point du deuxième bras entre les transistors Z3 et Z4.

Optionnellement, un premier condensateur de filtrage CF peut être connecté entre les bornes d'entrée.

Pour chacun des transistors Z1, Z2, Z3 et Z4, le premier élément de conversion 4 comporte une diode, connectés en parallèle avec ledit transistor.

Dans l'exemple illustré, lesdites diodes associées aux transistors Z1, Z2, Z3 et Z4 sont notées DZ1, DZ2, DZ3 et DZ4, respectivement.

Selon des exemples de réalisation, le deuxième élément de conversion 6 comporte quatre interrupteurs de puissance S1, S2, S3 et S4.

Deux transistors S1 et S2 sont connectés en série dans un premier bras du deuxième élément de conversion 6 entre les bornes de sortie. Deux autres transistors S3 et S4 sont connectés en série dans un deuxième bras du deuxième élément de conversion 6 en parallèle avec le premier bras.

Une première borne du premier enroulement secondaire 12 est connectée à un point du premier bras entre les transistors S1 et S2. L'autre borne du premier enroulement secondaire 12 est connectée au point médian 16.

La première borne du deuxième enroulement secondaire 14 est connectée au point médian 16. Une deuxième borne du deuxième enroulement secondaire 14 est connectée à un point du deuxième bras entre les transistors S3 et S4.

En d'autres termes, le premier transistor S2 est connecté à un premier bras du convertisseur entre le premier enroulement secondaire et une masse commune, et le deuxième transistor S4 est connecté à un deuxième bras du convertisseur de puissance entre le deuxième enroulement secondaire et la masse commune.

Pour chacun des transistors S1, S2, S3 et S4, le deuxième élément de conversion 6 comporte une diode de roue libre connectée en parallèle avec ledit transistor. Dans l'exemple illustré, les diodes associées aux transistors S1, S2, S3 et S4 sont notées D1, D2, D3 et D4, respectivement.

Selon l'invention, la pile à combustible FC est connectée en série avec une inductance LH (une bobine) et une diode DD au point médian 16 du transformateur. La pile à combustible FC est par ailleurs connectée à une des bornes de sortie du deuxième élément de conversion 6.

En variante, la diode DD peut être omise.

Par ailleurs, l'inductance LH peut être intégrée au transformateur 8.

Dans l'exemple illustré, l'inductance LH et la diode DD sont connectées dans une branche 18 du deuxième élément de conversion 6.

Par exemple, une première borne de la pile à combustible FC est connectée à la branche 18 et une deuxième borne de la pile à combustible FC est connectée à la masse électrique GND.

Selon l'invention, la diode DD est configurée pour autoriser la circulation du courant électrique depuis la pile à combustible FC vers le point médian 16.

En pratique, la valeur de l'inductance LH est choisie en fonction de l'utilisation qui sera faite du convertisseur unique, et notamment de la fréquence de commutation, de la tension de la pile à combustible, de la tension délivrée par la batterie et de la puissance que devra fournir le système d'alimentation 2.

Selon un exemple non limitatif, la valeur de l'inductance LH est comprise entre 0,1 mH et 10 H, de préférence entre 0.1H et 10H. Par exemple, pour des applications ferroviaires, avec une puissance de 100kW et une fréquence de commutation égale à 15kHz, l'inductance LH peut être choisie égale à 300µH.

Dans des exemples de réalisation, un condensateur C8 est connecté en parallèle avec la batterie BAT en sortie du deuxième élément de conversion de puissance. En variante, le condensateur C8 peut être omis.

Le dispositif de commande 3 est configurée pour piloter les éléments de conversion 4 et 6, notamment pour piloter la commutation des interrupteurs de puissance respectifs de ces éléments de conversion 4 et 6.

Par exemple, le dispositif de commande 3 pilote les interrupteurs en envoyant des signaux de commande permettant de régler leur commutation suivant une cadence prédéfinie. Les signaux de commande peuvent être des signaux modulés en largeur d'impulsion (PMW, pour « pulsed width modulation » en anglais).

Dans de nombreux modes de réalisation, l'unité de commande électronique 3 comporte un processeur, tel qu'un microcontrôleur programmable ou un microprocesseur, et une mémoire informatique formant un support d'enregistrement de données lisible par ordinateur.

Selon des exemples, la mémoire est une mémoire ROM, ou une mémoire RAM, ou une mémoire non volatile de type EPROM, ou EEPROM, ou FLASH, ou toute technologie de mémoire appropriée, ou toute combinaison possible de ces technologies de mémoire.

La mémoire comporte des instructions exécutables et/ou un code logiciel pour mettre en oeuvre un procédé de pilotage de transistors des éléments de conversion 4 et 6 lorsque ces instructions sont exécutées par le processeur.

En variante, le dispositif de commande 3 comporte un composant logique programmable (FPGA) ou un circuit intégré dédié configuré pour mettre en œuvre de tels procédés.

Selon l'invention, le dispositif de commande 3 est configurée pour permettre au système 2 de fonctionner dans un des modes de fonctionnement définis ci-dessous, ou dans au moins deux de ces modes de fonctionnement différents, parmi lesquels :
- un premier mode de fonctionnement dans lequel le système 2 est alimenté par une source extérieure au véhicule 1, par exemple au travers du dispositif de collecte de courant, pour recharger la batterie BAT. Avantageusement dans ce premier mode de fonctionnement, la pile à combustible est également propre à alimenter la batterie ou une charge électrique connectée à l'entrée du premier élément de conversion;
- un deuxième mode de fonctionnement dans lequel la batterie BAT est alimentée électriquement par un courant électrique délivré par la pile à combustible FC, afin de recharger la batterie BAT ; et
- un troisième mode de fonctionnement dans lequel la batterie BAT se décharge pour délivrer un courant électrique à une charge électrique connectée à l'entrée du premier élément de conversion de puissance, par exemple pour alimenter la chaîne de traction du véhicule 1.

De façon optionnelle mais néanmoins avantageuse, la commutation des transistors est réalisée aux instants pour lesquels la tension alternative prend une valeur nulle (ZVS, pour « zéro voltage switching » en anglais).

Dans le premier mode de fonctionnement, une tension électrique d'alimentation est appliquée aux bornes d'entrée du premier élément de conversion 4 par le dispositif de collecte. Le dispositif de commande 3 pilote les transistors Z1, Z2, Z3 et Z4 du premier élément de conversion 4 pour convertir la tension d'entrée en une tension alternative délivrée aux bornes du transformateur 8. Cette tension alternative est ensuite redressée par le deuxième élément de conversion 6 puis appliquée aux bornes de la batterie BAT pour la recharger.

En d'autres termes, la batterie BAT est chargée électriquement à partir d'une tension électrique appliquée à l'entrée du premier élément de conversion de puissance.

Par exemple, les diodes D1, D2, D3 et D4 fonctionnent comme un redresseur, les transistors S1, S2, S3 et S4 étant maintenus dans leur état ouvert.

La diode DD connectée sur la branche 18 empêche le courant de circuler vers la pile à combustible FC.

De façon optionnelle mais néanmoins avantageuse, le dispositif de commande 3 peut commuter les transistors S2 et S4 du deuxième élément de conversion 6 entre leurs états fermé et ouvert de façon synchronisée avec la commutation des transistors Z1, Z2, Z3 et Z4 du premier élément de conversion 4, de manière à assurer un fonctionnement en continu de la pile à combustible qui alimente alors la batterie ou la chaîne de traction en même temps que la source extérieure recharge la batterie. Les autres transistors S1 et S3 du deuxième élément de conversion 6 sont maintenus dans un état ouvert.

On comprend donc que, dans le premier mode de fonctionnement, la pile à combustible est également propre à alimenter la batterie ou une charge connectée à l'entrée du premier élément de conversion.

Dans le deuxième mode de fonctionnement, aucune tension électrique d'alimentation n'est appliquée aux bornes d'entrée du premier élément de conversion 4, mais la pile à combustible FC est utilisée pour recharger la batterie BAT.

Pendant ce temps, les transistors Z1, Z2, Z3 et Z4 du premier élément de conversion 4 peuvent être laissés dans l'état ouvert.

Par exemple, le dispositif de commande 3 maintient les transistors S1 et S3 du deuxième élément de conversion 6 dans un état ouvert, et commute régulièrement les transistors S2 et S4 du deuxième élément de conversion 6 pour que ces derniers jouent le rôle de hacheur élévateur de tension en sortie de la pile à combustible FC, avec l'aide des diodes D1 et D3, de manière à pouvoir charger la batterie BAT avec la tension fournie par la pile à combustible FC.

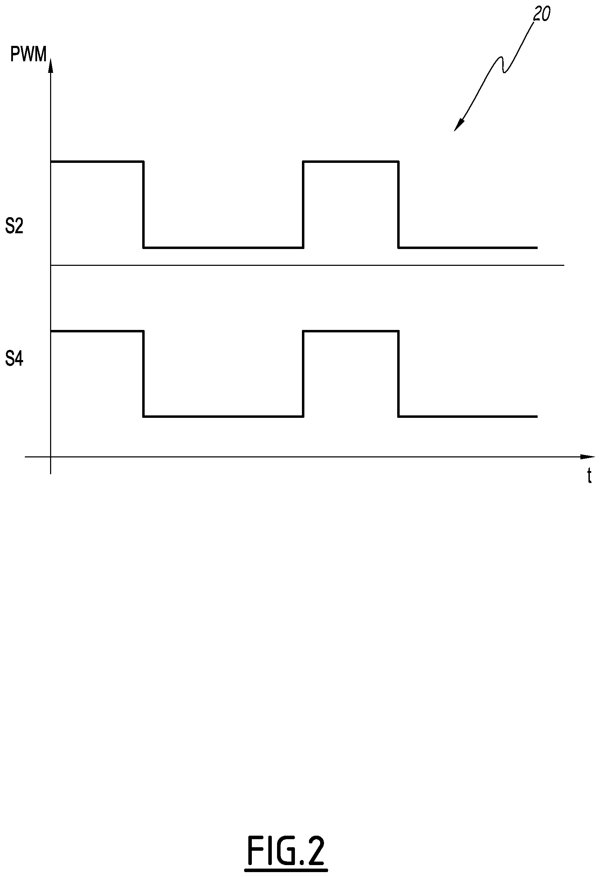

Par exemple, comme illustré par la loi de commande de type PWM donnée à titre d'exemple non limitatif à la figure 2, la commutation des transistors S2 et S4 vers l'état ouvert ou vers l'état fermé est synchronisée.

En se référant au circuit électrique illustré sur la figure 1, on comprend que, lorsque les transistors S2 et S4 sont tous les deux dans leur état fermé, un premier courant électrique débité par la pile à combustible FC circule par le premier enroulement 12 du secondaire et par le transistor S2. Un deuxième courant électrique débité par la pile à combustible FC circule par le deuxième enroulement 14 du secondaire et par le transistor S4.

Aucune puissance n'est transférée vers l'enroulement primaire 10 du transformateur, puisque ces deux courants électriques ont la même intensité, de sorte qu'ils créent dans le transformateur 8 des flux magnétiques qui s'annulent mutuellement.

Pendant cette séquence, la batterie BAT ne se recharge pas. L'inductance LH accumule de l'énergie fournie par la pile à combustible FC.

Lorsque les transistors S2 et S4 sont simultanément ouverts et restent tous les deux dans l'état ouvert, l'énergie précédemment stockée dans l'inductance LH se décharge et vient charger le condensateur C8 et la batterie BAT, conjointement avec la pile à combustible FC.

Par exemple, un premier courant électrique circule par la branche 18, par le premier enroulement 12 du secondaire et par la diode D1 du premier bras en direction de la batterie BAT. Un deuxième courant électrique circule par la branche 18, par le deuxième enroulement 14 du secondaire et par la diode D3 du deuxième bras en direction de la batterie BAT.

Le cycle de commutation des transistors S2 et S4 est ensuite répété périodiquement au cours du temps.

Dans un troisième mode de fonctionnement, la batterie BAT et la pile à combustible FC délivrent conjointement une tension électrique aux bornes d'entrée du premier élément de conversion 4, afin d'alimenter électriquement une charge électrique connectée à l'entrée du premier élément de conversion 4.

Par exemple, le dispositif de commande 3 pilote les transistors S1, S2, S3 et S4 pour faire fonctionner le deuxième élément de conversion 6 de manière à transférer une puissance électrique vers le premier élément de conversion 4.

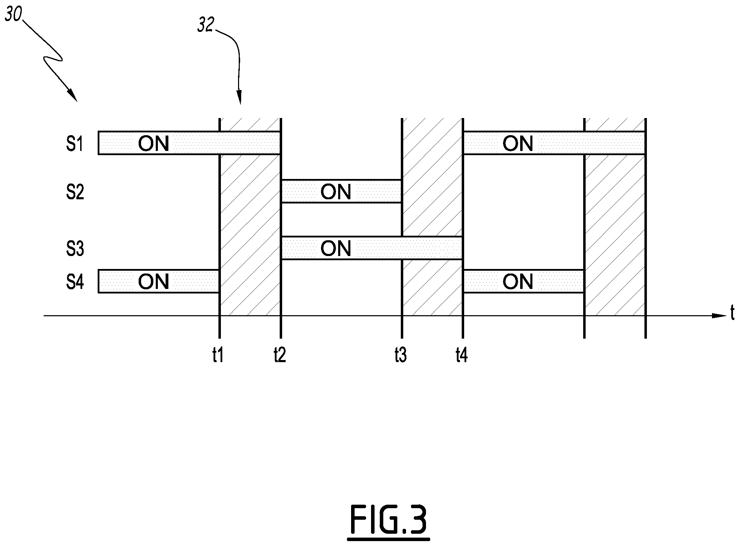

Un exemple de séquence de commutation des transistors S1, S2, S3 et S4 conforme à des modes de réalisation est illustré par le diagramme 30 de la figure 3.

Au début de chaque cycle, les transistors S1 et S4 sont commutés vers leur état fermé, tandis que les transistors S2 et S3 restent dans leur état ouvert. Cela permet à la batterie BAT de se décharger et ainsi d'appliquer une tension électrique aux bornes des enroulements secondaires 12 et 14. Pendant ce temps, alors que le transistor S4 est fermé, l'inductance LH emmagasine de l'énergie fournie par la pile à combustible FC.

Puis, à un instant t1, le transistor S4 est commuté vers son état ouvert, pendant que le transistor S1 reste fermé. A un instant t2 postérieur à l'instant t1, le transistor S1 est commuté vers son état ouvert.

Cette commutation à deux instants différents permet de décharger l'inductance LH lorsqu'on passe de la sous-séquence faisant intervenir les transistors S1 et S4 à la sous-séquence faisant intervenir les transistors S2 et S3.

Pendant l'intervalle de temps entre les instants t2 et t1, identifié par la zone hachurée 32 sur la figure 3, le transistor S4 reste dans l'état ouvert, ce qui permet à l'inductance LH de se décharger en alimentant la batterie BAT et/ou le condensateur C8.

A l'instant t2, les transistors S2 et S3 sont commutés vers leur état fermé, tandis que les transistors S1 et S4 restent dans leur état ouvert. Cela permet à la batterie BAT de se décharger et ainsi d'appliquer une tension électrique aux bornes des enroulements secondaires 12 et 14. Pendant ce temps, alors que le transistor S4 est fermé, l'inductance LH emmagasine de l'énergie fournie par la pile à combustible FC.

Puis, à un instant t3, le transistor S2 est commuté vers son état ouvert, pendant que le transistor S3 reste fermé. A un instant t4 postérieur à l'instant t3, le transistor S3 est commuté vers son état ouvert.

Ainsi, pendant l'intervalle de temps entre les instants t4 et t3, identifié sur la figure 3 par une zone hachurée similaire à la zone 32, le transistor S3 reste fermé, ce qui permet à l'inductance LH de se décharger.

Le cycle de commutation des transistors S1, S2, S3 et S4 est ensuite répété périodiquement au cours du temps.

En parallèle, les diodes DZ1, DZ2, DZ3, DZ4 redresse la tension en sortie de l'enroulement primaire pour convertir la tension électrique aux bornes du transformateur 8 en une tension continue qui sert à alimenter ladite charge électrique. Avantageusement, le dispositif de commande 3 pilote les transistors Z1, Z2, Z3 et Z4 du premier convertisseur 4 pour convertir la tension électrique aux bornes du transformateur 8 en une tension continue.

Grâce à l'invention, il est possible d'utiliser un seul système d'alimentation électrique capable de fonctionner aussi bien pour charger la batterie que pour alimenter la chaîne de traction à partir du courant fourni par la pile à combustible.

En particulier, en intégrant la pile à combustible FC au niveau du deuxième élément de conversion de puissance 6, il n'est pas nécessaire d'utiliser un hacheur dédié pour élever la tension fournie par la pile à combustible FC à un niveau de tension égal ou semblable à la tension aux bornes de la batterie BAT. Cela permet de réduire le coût et la complexité du système de traction 2, tout en préservant les performances et l'efficacité du système.

Notamment, les interrupteurs de puissance S2 et S4 déjà présents dans le deuxième élément de conversion 6 sont pilotés par le dispositif de commande 3 pour réaliser une fonction de hacheur élévateur en tension en sortie de la pile à combustible FC.

Toute caractéristique de l'un des modes de réalisation décrite ci-dessus peut être mise en œuvre dans les autres modes de réalisation et variantes décrits.

## Revendications

1. Système d'alimentation électrique (2) pour un véhicule électrique, tel qu'un véhicule ferroviaire, comportant : une pile à combustible (FC), une batterie électrique (BAT), un premier élément de conversion de puissance (4), un deuxième élément de conversion de puissance (6) et un transformateur (8), dans lequel une entrée du premier élément de conversion de puissance (4) est configurée pour recevoir un courant de charge ou délivrer un courant de traction, **caractérisé en ce que** le transformateur (8) comporte un enroulement primaire (10), un premier enroulement secondaire (12) et un deuxième enroulement secondaire (14), l'enroulement primaire (10) étant connecté à une sortie du premier élément de conversion de puissance et les enroulements secondaires (12, 14) étant connectés à une entrée du deuxième élément de conversion de puissance, et **en ce que** la batterie (BAT) est connectée aux bornes d'une sortie du deuxième élément de conversion de puissance, et **en ce que** la pile à combustible (FC) est connectée en série avec une inductance (LH) à un point médian (16) du transformateur entre le premier enroulement secondaire et le deuxième enroulement secondaire, le système d'alimentation électrique (2) comportant en outre une diode (DD) connectée en série avec l'inductance (LH) dans une branche (18) du deuxième élément de conversion (6), ladite diode (DD) empêchant le courant de circuler vers la pile à combustible (FC) ; et **en ce que** le deuxième élément de conversion de puissance est un convertisseur en pont comportant un premier transistor (S2) connecté à un premier bras du deuxième élément de conversion de puissance (6) entre le premier enroulement secondaire (12) et une masse commune (GND), et un deuxième transistor (S4) connecté à un deuxième bras du deuxième élément de conversion de puissance (6) entre le deuxième enroulement secondaire (14) et la masse commune, l'inductance (LH) étant configurée pour accumuler de l'énergie fournie par la pile à combustible (FC) lorsque les premier et deuxième transistors (S2, S4) sont tous les deux dans leur état fermé, et **en ce que** le système d'alimentation électrique (2) comprend un dispositif de commande (3) configuré pour piloter le système d'alimentation électrique de façon à fonctionner, au moins, dans un premier mode de fonctionnement dans lequel la batterie (BAT) est chargée électriquement à partir d'une tension électrique appliquée à l'entrée du premier élément de conversion de puissance, ou dans un deuxième mode de fonctionnement dans lequel la batterie (BAT) est rechargée par la pile à combustible (FC), le dispositif de commande (3) étant configuré pour commuter simultanément les premier et deuxième transistors dans le deuxième mode de fonctionnement pour que ces derniers jouent le rôle de hacheur élévateur de tension en sortie de la pile à combustible (FC).

2. Système d'alimentation électrique (2) selon la revendication 1, dans lequel dans le premier mode de fonctionnement, la pile à combustible est également propre à alimenter la batterie ou une charge connectée à l'entrée du premier élément de conversion.

3. Système d'alimentation électrique (2) selon la revendication 1 ou 2, dans lequel le premier élément de conversion de puissance (4) est un convertisseur en pont comportant une pluralité de transistors (Z1, Z2, Z3, Z4) et dans lequel, dans le premier mode de fonctionnement, le dispositif de commande (3) est configuré pour commuter les transistors (Z1, Z2, Z3, Z4) du premier élément de conversion de puissance.

4. Système d'alimentation électrique (2) selon l'une quelconque des revendications précédentes, dans lequel le système comprend un dispositif de commande (3) configuré pour piloter le système d'alimentation électrique de façon à fonctionner dans un troisième mode de fonctionnement dans lequel la batterie (BAT) et/ou la pile à combustible (FC) alimentent une charge électrique connectée à l'entrée du premier élément de conversion de puissance.

5. Système d'alimentation électrique selon la revendication précédente, dans lequel dans le troisième mode de fonctionnement, la batterie (BAT) et la pile à combustible (FC) alimentent conjointement une charge électrique connectée à l'entrée du premier élément de conversion de puissance.

6. Système d'alimentation électrique (2) selon l'une quelconque des revendications précédentes, dans lequel le premier élément de conversion (4) de puissance est propre à assurer une conversion de tension continu-alternatif et le deuxième élément de conversion de puissance (6) est propre à assurer une conversion de tension alternatif-continu.

7. Véhicule électrique (1), notamment un véhicule ferroviaire à traction électrique, **caractérisé en ce qu'**il comporte un système d'alimentation électrique (2) selon l'une quelconque des revendications précédentes.

## Patentansprüche

1. Stromversorgungssystem (2) für ein Elektrofahrzeug, wie z. B. ein Schienenfahrzeug, umfassend: eine Brennstoffzelle (FC), eine elektrische Batterie (BAT), ein erstes Stromrichtelement (4), ein zweites Stromrichtelement (6) und einen Transformator (8),
wobei ein Eingang des ersten Stromrichtelements (4) konfiguriert ist, um einen Ladestrom zu empfangen oder einen Bahnstrom zu liefern,
**dadurch gekennzeichnet, dass** der Transformator (8) eine primäre Wicklung (10), eine erste sekundäre Wicklung (12) und eine zweite sekundäre Wicklung (14) umfasst, wobei die primäre Wicklung (10) mit einem Ausgang des ersten Stromrichtelements verbunden ist und die sekundären Wicklungen (12, 14) mit einem Eingang des zweiten Stromrichtelements verbunden sind,
und dadurch, dass die Batterie (BAT) mit den Klemmen eines Ausgangs des zweiten Stromrichtelements verbunden ist,
und dadurch, dass die Brennstoffzelle (FC) in Reihe mit einer Induktivität (LH) mit einem mittleren Punkt (16) des Transformators zwischen der ersten sekundären Wicklung und der zweiten sekundären Wicklung verbunden ist, wobei das Stromversorgungssystem (2) außerdem eine Diode (DD) umfasst,
die in Reihe mit der Induktivität (LH) in einem Zweig (18) des zweiten Richtelements (6) verbunden ist, wobei die Diode (DD) verhindert, dass der Strom hin zur Brennstoffzelle (FC) zirkuliert;
und dadurch dass das zweite Stromrichtelement ein Brückenwandler ist, umfassend einen ersten Transistor (S2), der mit einem ersten Arm des zweiten Stromrichtelements (6) zwischen der ersten sekundären Wicklung (12) und einer gemeinsamen Masse (GND) verbunden ist, und einen zweiten Transistor (S4), der mit einem zweiten Arm des zweiten Stromrichtelements (6) zwischen der zweiten sekundären Wicklung (14) und der gemeinsamen Masse verbunden ist,
wobei die Induktivität (LH) konfiguriert ist, um Energie zu speichern, die von der Brennstoffzelle (FC) geliefert wird, wenn sich der erste und zweite Transistor (S2, S4) beide in ihrem geschlossenen Zustand befinden, und dadurch, dass das Stromversorgungssystem (2) eine Steuerung (3) umfasst,
die konfiguriert ist, um das Stromversorgungssystem derart zu steuern, dass es mindestens in einem ersten Betriebsmodus, in dem die Batterie (BAT) elektrisch ausgehend von einer elektrischen Spannung geladen wird, die am Eingang des ersten Stromrichtelements angelegt wird, oder in einem zweiten Betriebsmodus zu funktionieren, in dem die Batterie (BAT) von der Brennstoffzelle (FC) wiederaufgeladen wird, wobei die Steuerung (3) konfiguriert ist, um gleichzeitig den ersten und zweiten Transistor in den zweiten Betriebsmodus zu schalten, damit diese Letzteren die Rolle des Spannungserhöhungs-Zerhackers am Ausgang der Brennstoffzelle (FC) spielen.

2. Stromversorgungssystem (2) nach Anspruch 1, wobei im ersten Betriebsmodus die Brennstoffzelle ebenfalls dazu geeignet ist, die Batterie oder eine Last zu versorgen, die mit dem Eingang des ersten Richtelements verbunden ist.

3. Stromversorgungssystem (2) nach Anspruch 1 oder 2, wobei das erste Stromrichtelement (4) ein Brückenwandler ist, umfassend eine Vielzahl von Transistoren (Z1, Z2, Z3, Z4), und wobei, im ersten Betriebsmodus, die Steuerung (3) konfiguriert ist, um die Transistoren (Z1, Z2, Z3, Z4) des ersten Stromrichtelements zu steuern.

4. Stromversorgungssystem (2) nach einem der vorhergehenden Ansprüche, wobei das System eine Steuerung (3) umfasst, die konfiguriert ist, um das Stromversorgungssystem derart zu steuern, dass es in einem dritten Betriebsmodus funktioniert, in dem die Batterie (BAT) und/oder die Brennstoffzelle (FC) eine elektrische Last versorgen, die mit dem Eingang des ersten Stromrichtelements verbunden ist.

5. Stromversorgungssystem nach dem vorhergehenden Anspruch, wobei im dritten Betriebsmodus die Batterie (BAT) und die Brennstoffzelle (FC) zusammen eine elektrische Last versorgen, die mit dem Eingang des ersten Stromrichtelements verbunden ist.

6. Stromversorgungssystem (2) nach einem der vorhergehenden Ansprüche, wobei das erste Stromrichtelement (4) geeignet ist, ein kontinuierlich-alternatives Stromrichten sicherzustellen, und das zweite Stromrichtelement (6) geeignet ist, eine alternativ-kontinuierliches Stromrichten sicherzustellen.

7. Elektrofahrzeug (1), insbesondere ein Schienenfahrzeug mit elektrischem Antrieb, **dadurch gekennzeichnet, dass** es ein Stromversorgungssystem (2) nach einem der vorhergehenden Ansprüche umfasst.

## Claims

1. An electrical power supply system (2) for an electric vehicle, such as a rail vehicle, including: a fuel cell (FC), an electric battery (BAT), a first power conversion element (4), a second power conversion element (6) and a transformer (8),
wherein an input of the first power conversion element (4) is configured to receive a charge current or to deliver a traction current,
**characterized in that**
the transformer (8) includes a primary winding (10), a first secondary winding (12) and a second secondary winding (14), the primary winding (10) being connected to an output of the first power conversion element and the secondary windings (12, 14) being connected to an input of the second power conversion element,
and **in that**
the battery (BAT) is connected to the terminals of an output of the second power conversion element,
and **in that**
the fuel cell (FC) is connected in series with an inductance (LH) at a midpoint (16) of the transformer between the first secondary winding and the second secondary winding,
the electrical power supply system (2) further including a diode (DD) connected in series with the inductance (LH) in a branch (18) of the second conversion element (6), said diode (DD) preventing the current from circulating toward the fuel cell (FC);
and **in that**
the second power conversion element is a bridge converter including a first transistor (S2) connected to a first arm of the second power conversion element (6) between the first secondary winding (12) and a common ground (GND), and a second transistor (S4) connected to a second arm of the second power conversion element (6) between the second secondary winding (14) and the common ground,
the inductance (LH) being configured to accumulate energy supplied by the fuel cell (FC) when the first and second transistors (S2, S4) are both in their closed state,
and **in that** the electrical power supply system (2) comprises a control device (3) configured to control the electrical power supply system so as to operate at least in a first operating mode in which the battery (BAT) is electrically charged from an electric voltage applied at the input of the first power conversion element, or in a second operating mode in which the battery (BAT) is recharged by the fuel cell (FC), the control device (3) being configured to simultaneously switch the first and second transistors into the second operating mode so that the latter act as voltage step up clipper at the output of the fuel cell (FC).

2. The electrical power supply system (2) according to claim 1, wherein in the first operating mode, the fuel cell is also able to supply the battery or a charge connected to the input of the first conversion element.

3. The electrical power supply system (2) according to claim 1 or 2, wherein the first power conversion element (4) is a bridge converter including a plurality of transistors (Z1, Z2, Z3, Z4) and wherein, in the first operating mode, the control device (3) is configured to switch the transistors (Z1, Z2, Z3, Z4) of the first power conversion element.

4. The electrical power supply system (2) according to any one of the preceding claims, wherein the system comprises a control device (3) configured to control the electrical power supply system so as to operate in a third operating mode in which the battery (BAT) and/or the fuel cell (FC) supply an electric charge connected to the input of the first power conversion element.

5. The electrical power supply system according to the preceding claim, wherein in the third operating mode, the battery (BAT) and the fuel cell (FC) jointly supply an electric charge connected to the input of the first power conversion element.

6. The electrical power supply system (2) according to any one of the preceding claims, wherein the first power conversion element (4) is able to ensure a direct-alternating voltage conversion and the second power conversion element (6) is able to ensure an alternating-direct voltage conversion.

7. An electric vehicle (1), in particular a rail vehicle with electric traction, **characterized in that** it includes an electrical power supply system (2) according to any one of the preceding claims.
